# EUROPÄISCHE PATENTSCHRIFT

(11) **EP 2 532 986 B1**
(45) Veröffentlichungstag und Bekanntmachung des Hinweises auf die Patenterteilung: **16.08.2017**
(21) Anmeldenummer: 12169538.1
(22) Anmeldetag: 25.05.2012
(51) Int. Cl.: F24J 2/46, A47L 1/02, B08B 1/00, B08B 1/04

(54) **Reinigungsvorrichtung**
Cleaning device
Dispositif de nettoyage

(30) Priorität: 07.06.2011 DE 102011103537
(43) Veröffentlichungstag der Anmeldung: 12.12.2012
(73) Patentinhaber: Jäger, Anton, 89250 Senden (DE)
(72) Erfinder: Jäger, Anton, 89250 Senden (DE)
(74) Vertreter: Manitz Finsterwald Patentanwälte PartmbB

(56) Entgegenhaltungen:
- EP-A1- 0 755 835
- DE-A1- 2 656 255
- US-A- 2 723 407
- US-A- 4 597 127
- US-A1- 2003 028 982
- US-B1- 6 862 769

## Beschreibung

Die Erfindung betrifft eine Vorrichtung zum Reinigen von Oberflächen mit einem Reinigungskopf, der wenigstens ein Basisteil und zumindest eine am Basisteil angebrachte Bürstenanordnung, insbesondere eine zylindrische Bürstenwalze, umfasst.

Derartige Vorrichtungen sind grundsätzlich bekannt, z.B. aus EP 0 755 835 A1, US 6,862,769 B1 und US 4,597,127, und werden beispielsweise zum Reinigen von Solaranlagen eingesetzt. US 2003/0028982 A1 betrifft eine Kehrvorrichtung, bei der eine Halterung mittig zwischen einer Bürstenanordnung vorgesehen ist, wobei die Bürstenanordnung die Halterung überdeckt. Zum Stand der Technik wird außerdem auf US 2,723,407 sowie auf DE 26 56 255 A1 verwiesen.

Der Reinigung von Solaranlagen kommt eine immer größere Bedeutung zu, weshalb zunehmend Bedarf an sowohl effizienten als auch möglichst kostengünstigen Möglichkeiten zum Reinigen derartiger Solaranlagen besteht.

Unter anderem ist dabei zu berücksichtigen, dass in der Praxis die einzelnen Module von Solaranlagen unterschiedliche Breiten aufweisen, sodass eine Reinigungsvorrichtung die Möglichkeit bieten sollte, ohne Einbußen bei Effizienz und Handhabung an Solaranlagen mit Modulen unterschiedlicher Breite eingesetzt werden zu können. Ferner ist es wichtig, dass zur Minimierung der Reinigungskosten das Arbeiten mit der Reinigungsvorrichtung möglichst schnell und einfach vonstatten gehen kann. Wenn die Reinigung mit Unterstützung eines Fluids, insbesondere Wasser, erfolgt, dann sollte außerdem dafür gesorgt werden, dass der Wasserverbrauch möglichst gering ist, ohne allerdings die Reinigungswirkung zu beeinträchtigen.

Aufgabe der Erfindung ist es somit, eine Reinigungsvorrichtung der eingangs genannten Art dahingehend weiterzubilden, dass eine Reinigung insbesondere von Solaranlagen auf möglichst einfache und kostengünstige Weise ermöglicht wird.

Die Lösung dieser Aufgabe erfolgt durch die Merkmale des Anspruchs 1.

Erfindungsgemäß ist ein zumindest teilweise in das Basisteil integrierter Fluidantrieb für die zumindest eine Bürstenanordnung vorgesehen, welcher dazu ausgebildet ist, die Strömungsenergie eines dem Basisteil unter Druck zugeführten Fluids in eine Reinigungsbewegung der zumindest einen Bürstenanordnung umzusetzen.

Bei der zumindest einen Bürstenanordnung kann es sich insbesondere um eine oder mehrere drehbar an dem Basisteil gelagerte Bürstenwalzen handeln, die während des Reinigungsvorgangs unter fortlaufender Eigenrotation manuell oder automatisch über die jeweils zu reinigende Fläche bewegt werden.

Durch den erfindungsgemäßen integrierten Fluidantrieb ist es möglich, ein ohnehin zur Unterstützung der Reinigung benötigtes Fluid, insbesondere Wasser, außerdem dazu einzusetzen, die Reinigungsbewegung der zumindest einen Bürstenanordnung, insbesondere die Rotation einer oder mehrerer Bürstenwalzen, zu erzeugen. Schwere und teure Elektromotoren zum Antrieb der zumindest einen Bürstenanordnung können entfallen. Eine weitere Vereinfachung wird dadurch erzielt, dass ausschließlich für die Zufuhr des Fluids zu der zumindest einen Bürstenanordnung gesorgt zu werden braucht. Zusätzliche Versorgungsleitungen sind nicht notwendig. Dies reduziert das Gewicht der erfindungsgemäßen Reinigungsvorrichtung und vereinfacht deren Handhabung.

Gemäß der Erfindung ist ein Satz von mehreren Bürstenmodulen vorgesehen, die axial miteinander gekoppelt sind, um zu der zumindest einen Bürstenanordnung zusammengesetzt zu sein. Durch die Auswahl einer geeigneten Anzahl und einer geeigneten Art von Bürstenmodulen kann somit die Arbeitsbreite der zumindest einen Bürstenanordnung verändert und an den jeweils zu reinigenden Gegenstand angepasst werden. Insbesondere ist es so auf einfache und kostengünstige Weise möglich, die Reinigungsvorrichtung an die jeweilige Breite der Module oder der sogenannten Paneele einer Solaranlage anzupassen.

Erfindungsgemäß umfasst der Satz von Bürstenmodulen zumindest ein mit dem Basisteil gekoppeltes Basismodul, wenigstens ein axial außen geschlossenes Endmodul sowie zumindest ein zwischen das Endmodul und das Basismodul gekoppeltes Zwischenmodul.

Weitere mögliche Ausführungsformen der Erfindung sind auch in den abhängigen Ansprüchen, der Beschreibung sowie der Zeichnung angegeben.

Nachstehend werden unter anderem einige Aspekte der Erfindung beschrieben, für die sowohl unabhängig als auch in grundsätzlich beliebiger Kombination Schutz beansprucht wird. Diese Aspekte ermöglichen es insbesondere, eine erfindungsgemäße Reinigungsvorrichtung derart weiterzubilden, dass die Reinigungswirkung verbessert wird, die Handhabung erleichtert wird und/oder die Herstellungs- und/oder Betriebskosten reduziert werden.

Die Koppelung zwischen den einzelnen Bürstenmodulen kann insbesondere durch Verschrauben erfolgen. Dies kann werkzeuglos dadurch ermöglicht werden, dass die Bürstenmodule an einem axialen Ende eine Aufnahme mit einem Innengewinde und am anderen axialen Ende einen Schraubanschluss mit einem Außengewinde umfassen, oder umgekehrt, sodass die Bürstenmodule einfach miteinander verschraubt werden können.

Gemäß einem weiteren Aspekt der Erfindung kann vorgesehen sein, dass das Basisteil, insbesondere mittig, zwischen zwei Bürstenanordnungen angeordnet ist, wobei der von dem Basisteil eingenommene Axialbereich von der Beborstung zumindest einer der Bürstenanordnungen zumindest im Wesentlichen überdeckt ist.

Hierdurch kann eine hinsichtlich Reinigungswirkung und Handhabung vorteilhafte symmetrische Anordnung insofern geschaffen werden, als das Basisteil zwischen zwei Bürstenmodulen angeordnet ist. Ein Vorteil dieser Anordnung besteht darin, dass ein einziger Fluidantrieb gleichzeitig beide Bürstenanordnungen antreiben und insbesondere in Rotation versetzen kann. Hierdurch können Kosten und Gewicht eingespart werden. Eine derartige Anordnung mit einem zwischen zwei Bürstenanordnungen angeordneten Basisteil bringt allerdings zunächst das potentielle Problem mit sich, dass der von dem Basisteil eingenommene Axialbereich nicht zur Reinigung der jeweiligen Fläche zur Verfügung steht. Die Reinigungsvorrichtung kann somit auf der Fläche einen nicht von den Bürstenanordnungen beaufschlagten Streifen hinterlassen, der durch einen nachfolgenden Reinigungsvorgang beseitigt werden muss. Mit anderen Worten muss dafür gesorgt werden, dass mit einem relativ großen Überlapp gearbeitet wird. Dies erhöht den Reinigungsaufwand und folglich die Kosten für die Reinigung insbesondere von auf geneigten Gebäudedächern angeordneten Solaranlagen, da der verbleibende Streifen dazu führen kann, dass der durch die beidseitig vorgesehenen Bürstenanordnungen gewonnene Vorteil einer relativ großen Arbeitsbreite wieder zunichte gemacht wird. Die erfindungsgemäß vorgeschlagene Maßnahme, den von dem Basisteil eingenommenen Axialbereich von der Beborstung zumindest einer der Bürstenanordnungen zumindest im Wesentlichen zu überdecken, beseitigt das vorstehend erläuterte Problem der "Streifenbildung".

Für den Fachmann war nicht vorhersehbar, dass bei Verwendung eines in der Praxis lediglich eine relativ begrenzte Leistung zur Verfügung stellenden Fluidantriebs eine derartige Überdeckung des Axialbereiches möglich ist, wenn dieser Axialbereich außerdem für die Zufuhr des Fluids zum Basisteil genutzt wird, d.h. wenn eine wie auch immer konkret ausgebildete Fluidzufuhrleitung zwischen den Bürstenanordnungen hindurch zum Basisteil bzw. zum zumindest teilweise in das Basisteil integrierten Fluidantrieb geführt wird. Es hat sich überraschend herausgestellt, dass die dadurch bedingte Wechselwirkung der insbesondere rotierenden Beborstung mit der Fluidzufuhr keine die praktische Verwendung der Reinigungsvorrichtung infrage stellende Reduzierung der Arbeitsleistung zur Folge hat.

Für die Überdeckung des Axialbereiches braucht nicht nur eine der Bürstenanordnungen herangezogen zu werden. Vielmehr ist es bevorzugt, wenn auch nicht zwingend, dass die Beborstungen beide der zu beiden Seiten des Basisteils angeordneten Bürstenanordnungen gemeinsam den Axialbereich überdecken.

In einer bevorzugten Ausgestaltung ist vorgesehen, dass zumindest im Bereich des Basisteils gelegene Teile der Beborstungen der Bürstenanordnungen schräg verlaufen und/oder aufeinander zu gerichtet oder geneigt sind. Dies stellt eine überraschend einfache und wirkungsvolle Maßnahme dar, um die gewünschte Streifenfreiheit zu erzielen.

In einer weiteren Ausgestaltung ist vorgesehen, dass am weitestem axial innen gelegene Abschnitte der Beborstungen in einander unmittelbar gegenüber liegenden Ebenen verlaufen oder einander durchdringen. Die Borsten der an einander gegenüberliegenden Seiten des Basisteils vorgesehenen Bürstenanordnungen können also entweder unter Minimierung bzw. Beseitigung eines axialen Spaltes unmittelbar aneinander vorbeilaufen oder ineinander ragen. Da in einer bevorzugten Ausgestaltung beide Bürstenanordnungen in der gleichen Weise bewegt werden, insbesondere gleichsinnig rotieren, führt eine derartige Borstendurchdringung nicht zu Leistungsverlusten. Gleichwohl ist es im Rahmen der Erfindung möglich, die beiden Bürstenanordnungen gegenläufig rotieren zu lassen. Es wurde überraschend gefunden, dass in einem solchen Fall trotz der bei gegenläufiger Rotation im Bereich des Basisteils einander prinzipiell behindernden Borsten es zu keinem nennenswerten Leistungsverlust kommt.

Eine besonders vorteilhafte Optimierung der erfindungsgemäßen Reinigungsvorrichtung wird durch eine Ausführung erzielt, bei der vorgesehen ist, dass der Fluidantrieb auf einen dem Basisteil zugeordneten getriebenen Teil und einen einer Fluidzufuhreinrichtung zugeordneten treibenden Teil aufgeteilt ist, wobei die beiden Teile des Fluidantriebs lösbar miteinander gekoppelt oder koppelbar sind. Eine funktionsbereite Komplettierung des Fluidantriebs ist somit bei mit dem Basisteil bestimmungsgemäß verbundener Fluidzufuhreinrichtung gegeben. Eine solche Aufteilung ermöglicht es insbesondere, eine extrem schlanke bzw. schmal bauende Fluidzufuhr zum zumindest teilweise in das Basisteil integrierten Fluidantrieb zu realisieren. Ein potentiell zur Streifenbildung führender freier Axialbereich zwischen zwei zu beiden Seiten des Basisteils angeordneten Bürstenanordnungen kann hierdurch von vorne herein minimiert werden.

Ein weiterer Vorteil der genannten Aufteilung besteht darin, dass zumindest der treibende Teil des Fluidantriebs auf einfache Weise verändert bzw. ausgewechselt werden kann, um das Arbeitsverhalten der Reinigungsvorrichtung, insbesondere die Reinigungsleistung und/oder den Fluidverbrauch, an die jeweilige Anwendung anzupassen.

In einem Ausführungsbeispiel weist der Fluidantrieb ein langgestrecktes, insbesondere stiftförmiges, Fluidausstoßorgan auf, das im Bereich des Basisteils angeordnet ist, wobei insbesondere das Fluidausstoßorgan eine Düse umfasst.

Während dieses Fluidausstoßorgan im Reinigungsbetrieb im Bereich des Basisteils angeordnet ist, kann das Fluidausstoßorgan gleichwohl das einer Fluidzufuhreinrichtung zugeordnete treibende Teil im Sinne der vorstehend allgemein offenbarten Aufteilung des Fluidantriebs darstellen. Das Fluidausstoßorgan, insbesondere eine Düse, kann ein separates, auswechselbares Bauteil sein. Alternativ kann das Fluidausstoßorgan ein integraler Bestandteil einer wie auch immer konkret ausgestalteten Fluidzufuhreinrichtung sein, insbesondere einer Lanze oder einer Zufuhrleitung.

In einer weiteren Ausgestaltung der Erfindung ist vorgesehen, dass das Fluidausstoßorgan zumindest im Bereich des Basisteils radial oder tangential bezüglich einer Rotationsachse der zumindest einen Bürstenanordnung verläuft.

Das Fluidausstoßorgan kann am Ende einer Fluidzufuhrleitung, insbesondere einer Lanze und/oder Haltestange, angeordnet sein, die durch Zusammenstecken mit dem Basisteil gekoppelt oder koppelbar ist. Hierzu kann das Basisteil eine Steckaufnahme für die Fluidzufuhrleitung bzw. das Fluidausstoßorgan umfassen, wobei grundsätzlich auch eine umgekehrte Ausgestaltung möglich ist, d.h. die Fluidzufuhrleitung eine Steckaufnahme aufweist, in welche ein entsprechend ausgebildetes Steckteil des Basisteils einzuführen ist, um die Reinigungsvorrichtung betriebsbereit zusammenzusetzen.

Das Fluidausstoßorgan kann, insbesondere zur Veränderung der Reinigungsleistung und/oder des Fluidverbrauchs, auswechselbar sein, wobei insbesondere ein Satz von Fluidausstoßorganen mit unterschiedlichen Strömungsquerschnitten vorgesehen ist.

Wie vorstehend bereits erwähnt, kann es sich bei dem Fluidausstoßorgan um eine Düse bzw. Treibdüse zum Beaufschlagen einer Turbine des Fluidantriebs handeln. Mögliche Düsengrößen, d.h. Durchmesser einer Fluidaustrittsöffnung der Düse, liegen insbesondere im Bereich von 0,5 mm - 1,5 mm. Es wurde überraschend gefunden, dass sich selbst bei einem relativ geringen Wasserverbrauch von 1,0 - 1,5 Liter pro Minute ein ausreichend hohes Drehmoment für den Rotationsantrieb zweier zu beiden Seiten des Basisteils angeordneter zylindrischer Bürstenwalzen erzielen lässt. Diese und auch nachstehende Angaben beziehen sich auf einen Druck des beispielsweise von einem Hochdruckreiniger zur Verfügung gestellten Wassers von etwa 100 bar.

Generell ist zu bemerken, dass insbesondere in Abhängigkeit von der jeweils eingesetzten Düse die Reinigungsvorrichtung bevorzugt derart ausgelegt ist, dass der Wasserverbrauch im Bereich zwischen 1,0 - 6,0 Liter liegt. Die Außendurchmesser rotierender Bürstenwalzen liegen gemäß der Erfindung beispielsweise im Bereich von 120 mm - 150 mm. Ein kleinerer Außendurchmesser ermöglicht einen geringeren Wasserverbrauch, wobei größere Bürstenwalzen den Vorteil einer größeren Umfangsgeschwindigkeit und somit einer höhere Flächenleistung haben, d.h. ohne Beeinträchtigung der Reinigungswirkung können große rotierende Walzen mit höherer Geschwindigkeit über die jeweils zu reinigende Fläche bewegt werden als kleinere Walzen. Ferner lässt sich bei Bürstenwalzen mit einem großen Durchmesser mit einem relativ niedrigen Wasserverbrauch ein vergleichsweise großes Drehmoment an einem Fluidantrieb erzielen. Der Kerndurchmesser der rotierenden Bürsten, insbesondere der Außendurchmesser eines die Bürsten tragenden Walzenmantels, beträgt insbesondere etwa 65 mm.

Insbesondere im Fall der Reinigung von geneigten Flächen wird in der Praxis die Wahl des Außendurchmessers der Bürstenwalzen auch in Abhängigkeit von dem Neigungswinkel der zu reinigenden Fläche getroffen.

Wie vorstehend bereits erwähnt, kann der Fluidantrieb ein unmittelbar vom Fluid angetriebenes Antriebsorgan aufweisen, insbesondere eine Turbine oder ein Schaufelrad. Für den Fall, dass zwei zu beiden Seiten des Basisteils angeordnete Bürstenanordnungen vorgesehen sind, wird insbesondere vorgeschlagen, ein einziges unmittelbar vom Fluid angetriebenes Antriebsorgan vorzusehen, von welchem beide Bürstenanordnungen gemeinsam angetrieben werden.

Gemäß einem weiteren Ausführungsbeispiel der Erfindung ist der Fluidantrieb in unterschiedlichen Drehrichtungen betreibbar, und zwar durch Verdrehen einer Fluidzufuhrleitung und/oder eines Fluidausstoßorgans, wobei insbesondere dieses Verdrehen um 180° um eine Längsachse der Fluidzufuhrleitung bzw. des Fluidausstoßorgans erfolgt.

Ein derartiges Umschalten zwischen den entgegengesetzten Drehrichtungen des Fluidantriebs kann beispielsweise dadurch erfolgen, dass eine am Ende ein Fluidausstoßorgan tragende Fluidzufuhrleitung und/oder ein in Strömungsrichtung vor einem Fluidaustritt gelegener Bereich einer Fluidzufuhrleitung und/oder eines Fluidausstoßorgans zumindest im Wesentlichen radial bezüglich einer Rotationsachse der zumindest einen Bürstenanordnung verläuft und ein Fluidaustritt derart ausgerichtet ist, dass in Abhängigkeit von der Drehstellung der Fluidzufuhrleitung und/oder des Fluidausstoßorgans der Fluidantrieb, insbesondere eine Turbine oder ein Schaufelrad, in unterschiedlichem Drehsinn beaufschlagt wird. Der erwähnten radiale Verlauf ist dabei nicht zwingend.

Mit anderen Worten kann gemäß dieser Ausgestaltung vorgesehen sein, dass die Fluidzufuhrleitung oder das Fluidausstoßorgan, letztlich also die Richtung, in welcher das Fluid austritt, so verstellt werden kann, dass der Fluidantrieb entweder in der einen Richtung oder in der anderen Richtung mit dem austretenden Fluid beaufschlagt wird. Eine Turbine oder ein Schaufelrad beispielsweise wird also entweder "von vorne" oder "von hinten" beaufschlagt.

In einem Ausführungsbeispiel ist vorgesehen, dass ein Antriebsorgan, insbesondere eine Turbine oder ein Schaufelrad, des Fluidantriebs drehrichtungsneutral geformte Schaufelelemente aufweist. Hierdurch ist der Fluidantrieb gleichermaßen für einen Vorwärtsantrieb und einen Rückwärtsantrieb geeignet.

Die zumindest eine Bürstenanordnung kann gemäß einem weiteren Aspekt der Erfindung mit einer Spritzschutzeinrichtung versehen sein.

Die Spritzschutzeinrichtung kann eine außerhalb der Beborstung der zumindest einen Bürstenanordnung gelegene Abdeckung umfassen. Diese kann sich grundsätzlich über einen beliebigen, entsprechend der jeweils konkreten Ausgestaltung der Reinigungsvorrichtung angepassten Winkelbereich erstrecken, welcher z.B. bis zu 180° oder bis zu 360° bezüglich einer Drehachse einer oder mehrerer rotierender Bürstenwalzen betragen kann.

Alternativ oder zusätzlich kann die Spritzschutzeinrichtung einen zumindest teilweise in die Beborstung hinein ragenden Abstreifer umfassen, relativ zu welchem sich die Bürstenanordnung während des Reinigungsbetriebs bewegt und an den die Beborstung während des Reinigungsbetriebs anschlägt. Hierdurch können die Borsten automatisch in definierter Weise an einer vorgegebenen Stelle während des Reinigungsbetriebs von Verunreinigungen bzw. verschmutztem Reinigungsfluid befreit werden. Dabei wird in besonders einfacher und wirkungsvoller Weise vermieden, dass ein unkontrolliertes Verspritzen der Verunreinigungen stattfindet und der Reinigungseffekt gleich wieder zunichte gemacht wird.

Gemäß einem weiteren Ausführungsbeispiel der Erfindung umfasst das Basisteil einen flächigen, insbesondere platten- oder scheibenförmigen Festigkeitsträger, insbesondere aus Metall, der zumindest bereichsweise von einem Außenteil aus Kunststoff umgeben, insbesondere in Kunststoff eingegossen oder mit Kunststoff umspritzt, ist.

Die Erfindung wird im Folgenden beispielhaft unter Bezugnahme auf die Zeichnung beschrieben. Es zeigen:
- Fig. 1: verschiedene Ansichten eines Ausführungsbeispiels einer erfindungsgemäßen Reinigungsvorrichtung.
- Fig. 2: ein Basisteil sowie eine Fluidzufuhrleitung einer erfindungsgemäßen Reinigungsvorrichtung,
- Fig. 3: ein Ausführungsbeispiel einer erfindungsgemäßen Bürstenanordnung,
- Fig. 4: ein weiteres Ausführungsbeispiel einer erfindungsgemäßen Bürstenanordnung, und
- Fig. 5: eine andere Darstellung der Bürstenanordnung von Fig. 4.

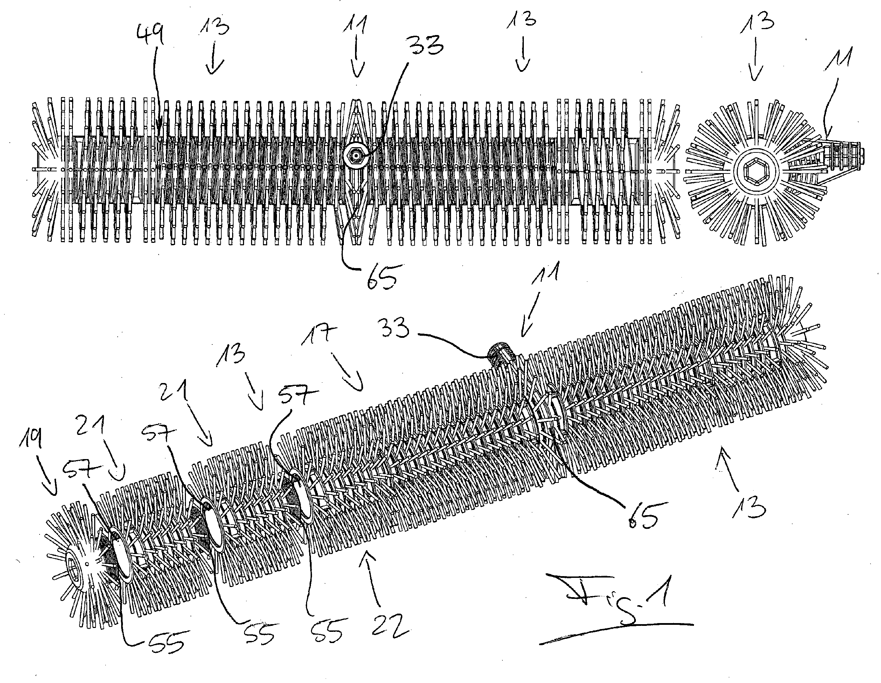

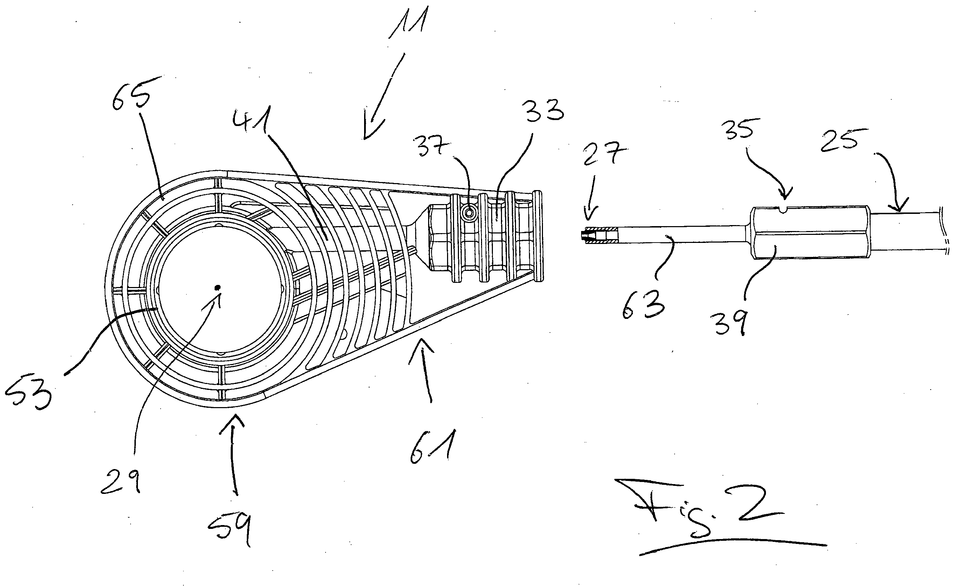

Fig. 1 zeigt ein Ausführungsbeispiel einer Doppel- oder Zwillingsbürste einer erfindungsgemäßen Reinigungsvorrichtung, die zwei Bürstenanordnungen 13 umfasst, die zu beiden Seiten eines Basisteils 11 angeordnet und mit dem Basisteil 11 derart verbunden sind, dass ein in das Basisteil 11 integrierter Fluidantrieb (in Fig. 1 nicht dargestellt) beide Bürstenanordnungen 13 gleichzeitig mit gleichem Drehsinn in eine Reinigungsbewegung versetzen kann, bei der es sich um eine Rotationsbewegung um eine gemeinsame Rotationsachse 29 (vgl. Fig. 2) handelt.

Aufbau und Funktionsweise der Bürstenanordnungen 13 und des Basisteils 11 werden nachstehend näher erläutert.

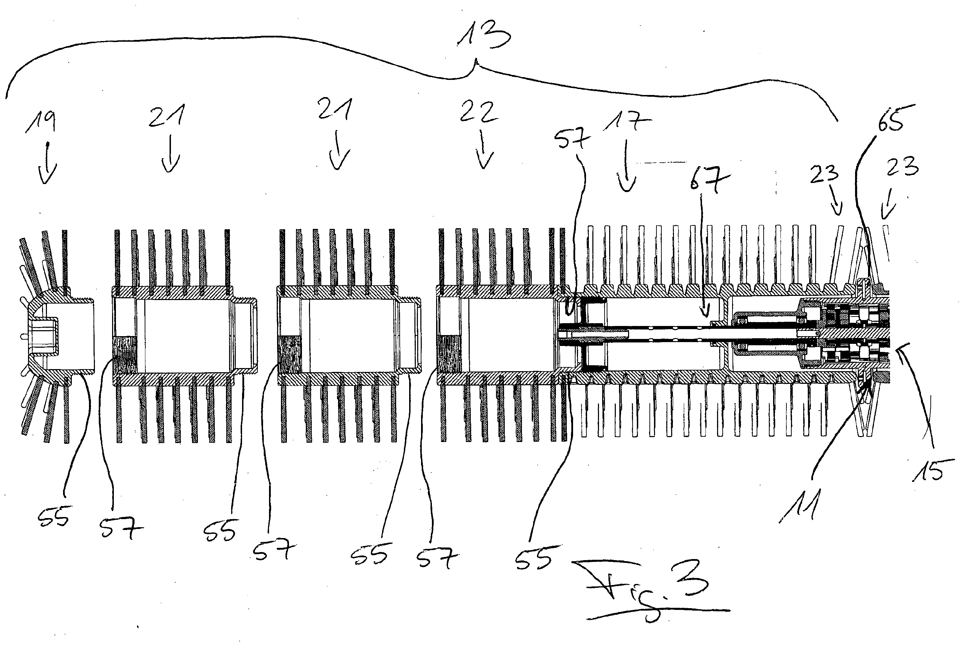

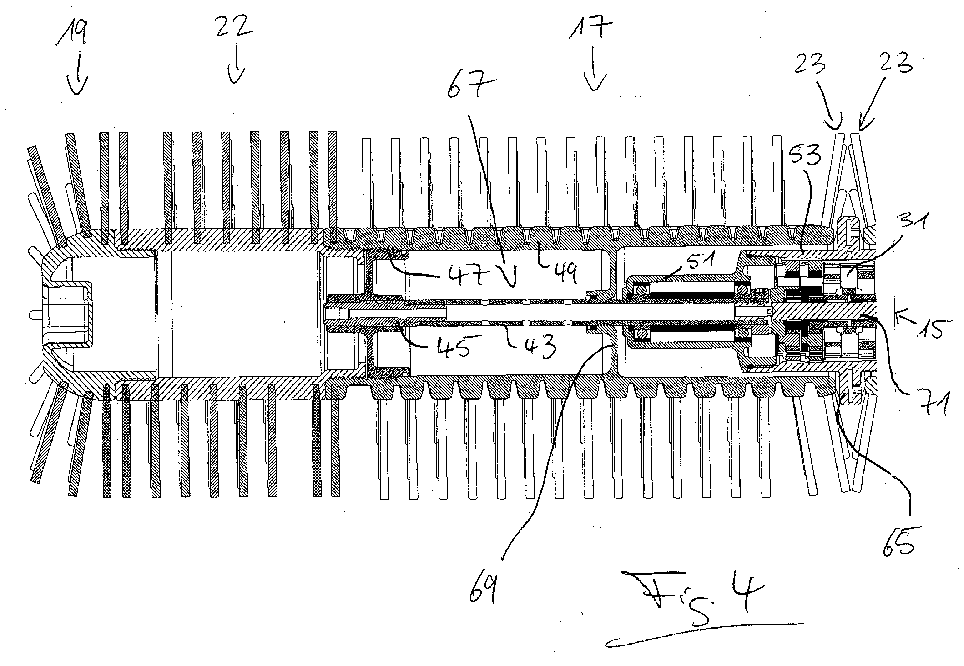

Fig. 1 zeigt insbesondere einen Modulaufbau der Bürstenanordnungen 13, der dazu dient, die Arbeitsbreite der Reinigungsvorrichtung an die jeweilige Anwendung anzupassen. In dem dargestellten Ausführungsbeispiel umfasst jede Bürstenanordnung 13 ein Basismodul 17, zwei Zwischenmodule 21 sowie ein Endmodul 19. Die Module können miteinander verschraubt werden. Hierzu ist jeweils ein Schraubabschnitt 55 mit einem Außengewinde vorgesehen, der mit einem mit einem Innengewinde versehenen Schraubabschnitt 57 eines anderen Moduls verschraubt werden kann, um auf diese Weise letztlich eine beliebige Anzahl von Bürstenmodulen axial miteinander zu koppeln und so zu einer Bürstenanordnung 13 mit der jeweils gewünschten Arbeitsbreite zusammenzusetzen. Der Vergleich insbesondere von Fig. 3 und Fig. 4 zeigt, dass die Bürstenanordnungen 13 gemäß Fig. 4 jeweils eine geringe Anzahl von Bürstenmodulen aufweisen als jene von Fig. 3.

Da der Fluidantrieb und das Basisteil 11 derart ausgelegt sind, dass über einen nachstehend näher erläuterten Aufnahmeabschnitt 33 in das Basisteil 11 einströmendes Fluid nach Verlassen des Fluidantriebs in das Innere eines mit Borsten versehenen Außenmantels 49 der Bürstenanordnung 13 strömt, um von dort über nicht dargestellte Austrittsöffnungen am Umfang des Außenmantels 49 austreten und die Beborstungen bzw. den zu reinigenden Gegenstand benetzen zu können, ist das Endmodul 19 axial endseitig geschlossen.

Das Basismodul 17 umfasst ein Übergangsmodul 22, das lösbar mit einem Abschnitt des Basismoduls 17 verschraubt ist. Das Übergangsmodul 22 kann insofern als ein weiteres Zwischenmodul entsprechend den Zwischenmodulen 21 angesehen werden. Insbesondere kann das Übergangsmodul 22 identisch zu oder baugleich mit den Zwischenmodulen 21 ausgeführt sein. Wie Fig. 3 zeigt, besteht eine Besonderheit des Übergangsmoduls 22 darin, dass es mit jenem Abschnitt des Basismoduls 17 verschraubt ist, der axial endseitig eine nachstehend näher erläuterte Traganordnung mit einem Stopfen 47, einem Verbindungsstück 45 sowie einer Tragstange 43 hält (vgl. Fig. 4).

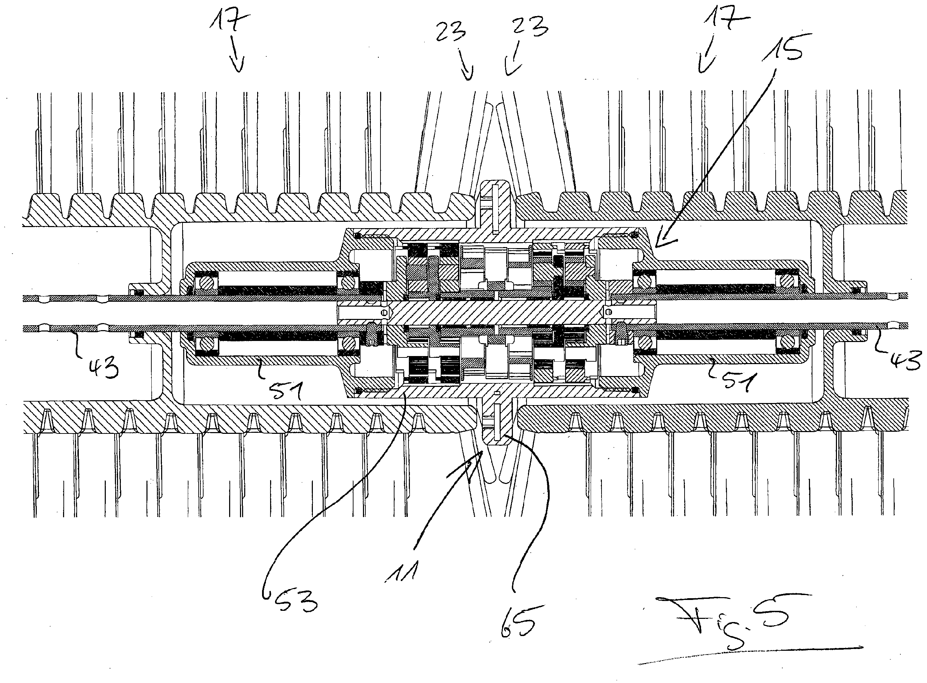

Wie Fig. 2 zeigt, umfasst das Basisteil 11 einen zylindrischen Abschnitt 59, dessen Mittelachse mit der Rotationsachse 29 der Bürstenanordnungen 13 zusammenfällt und der in nachstehend näher beschriebener Weise ein sich axial erstreckendes Gehäuse 53 (vgl. Fig. 4 und 5) für einen Fluidantrieb umfasst.

Des Weiteren umfasst das Basisteil 11 einen im Wesentlichen radial abstehenden Zuleitungsabschnitt 61, der eine bezüglich der Rotationsachse 29 tangential verlaufende Durchführung 41 sowie einen in die Durchführung 41 mündenden, einen vergrößerten Querschnitt aufweisenden Aufnahmeabschnitt 33 umfasst.

Die vergleichsweise schmale Durchführung 41 dient zur Aufnahme eines relativ dünnen, stiftförmigen Strahlrohrabschnitts 63, während der Aufnahmeabschnitt 33 zur Aufnahme einer hinsichtlich des Durchmessers gegenüber dem Strahlrohrabschnitt 63 vergrößerten Erweiterung 39 dient, die in Strömungsrichtung des Fluids in den Strahlrohrabschnitt 63 übergeht.

Der Strahlrohrabschnitt 63 und die Erweiterung 39 sind endseitige Abschnitte einer Fluidzufuhrleitung 25, die insbesondere als Lanze ausgebildet ist und über welche die erfindungsgemäße Reinigungsvorrichtung an eine nicht dargestellte Fluiddruckquelle, insbesondere an einen handelsüblichen Hochdruckreiniger, angeschlossen werden kann.

In dem dargestellten Ausführungsbeispiel erstreckt sich das das Strahlrohr 63 und die Erweiterung 39 umfassende Ende der Leitung 25 im mit dem Basisteil 11 zusammengesteckten Zustand tangential zur Rotationsachse 29.

Das Basisteil 11 ist im Bereich des Aufnahmeabschnitts 33 mit einer Sicherung 37 versehen, die im zusammengesetzten Zustand in eine Aussparung 35 der Erweiterung 39 der Leitung 25 eingreift und ein unbeabsichtigtes Herausziehen der Leitung 25 aus dem Basisteil 11 verhindert.

Am freien Ende des Strahlrohres 63 ist ein auswechselbares Fluidausstoßorgan in Form eines Düsenelements 27 vorgesehen. Die Austrittsöffnung der Düse 27 dient als Fluidaustritt, der derart ausgerichtet ist, dass eine in Fig. 2 nicht dargestellte Turbine des Fluidantriebs mit einem Fluidstrahl beaufschlagt wird. Der erwähnte Fluidantrieb ist in jenem Bereich des zylindrischen Abschnitts 59 des Basisteils 11 angeordnet, der von dem Gehäuse 53 umgeben ist (vgl. Fig. 4 und 5).

Umgeben wird das Gehäuse 53 in einem mittleren Bereich von einem flachen kreisringscheibenförmigen Flanschabschnitt 65, der einstückig mit dem zylindrischen Gehäuse 53 verbunden ist und von dem Gehäuse 53 radial absteht, wobei von dem Flanschabschnitt 65 der Zuleitungsabschnitt 61 in radialer Richtung ausgeht. Sowohl der Flanschabschnitt 65 als auch der Zuleitungsabschnitt 61 sind in Richtung der Rotationsachse 29 extrem schmal bzw. dünn ausgebildet, um den vom Basisteil 11 eingenommenen Axialbereich zwischen den beiden Bürstenanordnungen 13 (vgl. Fig. 1) zu minimieren.

Vorzugsweise ist das Basisteil 11 als ein Mehrkomponentenbauteil ausgebildet, das einen inneren Festigkeitsträger insbesondere in Form eines Metallblechs umfasst, der mit seinen Flachseiten senkrecht zur Rotationsachse 29 orientiert ist. Dieses Blech kann mit Kunststoff umspritzt sein, um die gewünschte Form bzw. Struktur zu realisieren. Insgesamt lässt sich hierdurch eine extrem stabile und insbesondere biegesteife Ausgestaltung für das Basisteil 11 erreichen, wobei dies bei einem denkbar geringen Gewicht des Basisteils 11 ermöglicht wird.

Fig. 3 zeigt eine Bürstenanordnung 13, die auf einer Seite des Basisteils 11 angeordnet ist und somit die eine Hälfte einer Doppel- bzw. Zwillingsbürste einer erfindungsgemäßen Reinigungsvorrichtung bildet.

In dem dargestellten Ausführungsbeispiel umfasst die Bürstenanordnung 13 drei baugleiche Bürstenmodule 21, 22, wobei das Bürstenmodul 22 insofern als Übergangsmodul bezeichnet werden kann, als es mit dem Basismodul 17 verbunden ist, das mittels einer Traganordnung 67 mit dem Basisteil 11 verbunden und mittels eines Fluidantriebs 15 relativ zum Basisteil 11 in Rotation versetzt werden kann.

Wie Fig. 3 außerdem zu entnehmen ist, sind jeweils die Borsten der beiden am weitesten axial innen gelegenen Borstenscheiben des Basismoduls bezüglich der Rotationsachse 29 geneigt angeordnet, wobei diese im Bereich des Basisteils 11 gelegenen Teile 23 der Beborstungen der beiden Bürstenanordnungen 13 aufeinander zu gerichtet sind.

Hierdurch ergibt sich insgesamt eine Überdeckung des vom Basisteil 11 bzw. dessen Flanschabschnitt 65 eingenommenen Axialbereiches zwischen den beiden Bürstenanordnungen 13, wodurch ein streifenfreies Arbeiten mit der Doppel- bzw. Zwillingsbürstenwalze gewährleistet ist. Mit anderen Worten wird durch diese Anordnung der Borsten die "Lücke" zwischen den beiden Bürstenanordnungen 13 "geschlossen".

Wie insbesondere Fig. 4 zeigt, umfasst die Traganordnung 17 zwischen dem Gehäuse 53 des Basisteils 11 und dem Außenmantel 49 des Basis-Bürstenmoduls 17 eine Tragstange 43, die über ein Verbindungsstück 45 mit einem Stopfen 47 gekoppelt ist, der in den axialen Endbereich des Basis-Bürstenmoduls 17 eingeschraubt ist und somit den Außenmantel 49 im axialen Endbereich trägt. An einem weiter axial innen gelegenen Bereich wird der Außenmantel 49 mittels eines integralen Halteabschnitts 69 gehalten, der auf der Tragstange 43 abgestützt ist.

Die Tragstange 43 und somit das Basis-Bürstenmodul 17 und die angekoppelten weiteren Bürstenmodule 22, 19 werden mittels des Fluidantriebs 15 in Rotation versetzt, auf dessen Aufbau hier nicht im Detail eingegangen werden soll.

Der Fluidantrieb 15 umfasst ein zentrales Antriebsorgan 31 in Form eines Turbinen- oder Schaufelrades, das mittels des aus der Düse 27 (vgl. Fig. 2) austretenden Fluidstrahls beaufschlagt und somit in Rotation versetzt wird. Auf jeder Seite dieses Antriebsorgans 31 sind zwei axial hintereinander geschaltete Planetengetriebe angeordnet. Der Planetenradträger des ersten Planetengetriebes dient als Sonnenrad für das zweite Planetengetriebe. Die beiden axial äußeren Planetenradträger treiben jeweils die Tragstange 43 an. Die Tragstangen 43 dienen somit als Antriebswellen, die über eine gemeinsame, sich durch den Fluidrotationsantrieb 13 hindurch erstreckende zentrale Tragwelle 71 miteinander verbunden sind.

Die erwähnte Traganordnung 67 umfasst außerdem einen Tragkäfig 51, der axial endseitig mit dem Gehäuse 53 des Basisteils 11 verbunden ist.

Wie auch aus Fig. 5 hervorgeht, sind die beiden Basismodule 17 der Bürstenanordnungen 13 baugleich ausgeführt und zu beiden Seiten des flachen Flanschabschnitts 65 des Basisteils 11 angeordnet, wobei die beiden Basismodule 17 mittels des gemeinsamen, symmetrisch bezüglich des Flanschabschnitts 65 ausgebildeten Fluidantriebs 15 in Rotation versetzt werden.

Abweichend von der in Fig. 2 dargestellten Ausgestaltung können die Leitung 25 und das Basisteil 11 derart ausgebildet sein, dass die Leitung 25 um ihre Längsachse relativ zum Basisteil 11 gedreht werden kann, um auf diese Weise die Richtung, in welcher das Fluid aus der Düse 27 austritt, verändern zu können. Insbesondere ist die Ausgestaltung derart gewählt, dass zwischen zwei unterschiedlichen Fluidaustrittsrichtungen dadurch umgeschaltet werden kann, dass die Leitung 25 und mit ihr die Düse 27 um 180° gedreht wird. Die beiden Drehstellungen können für einen Benutzer z.B. durch einen Verrastungsmechanismus leicht einstellbar und insbesondere eindeutig spürbar ausgeführt sein.

Je nach Drehstellung der Leitung 25 und damit Austrittsrichtung des Fluids aus der Düse 27 wird ein Antriebsorgan des Fluidantriebs entweder in der einen Drehrichtung oder in der entgegengesetzten Drehrichtung beaufschlagt, so dass der Benutzer durch einfaches Verdrehen der Leitung 25 zwischen einem Vorwärtsbetrieb und einem Rückwärtsbetrieb bezüglich der Drehrichtung der Bürstenanordnungen 13 umschalten kann.

Des Weiteren kann die erfindungsgemäße Reinigungsvorrichtung mit einer Spritzschutzeinrichtung (nicht dargestellt) versehen sein, wie sie im Einleitungsteil erläutert wurde.

### Bezugszeichenliste

- 11: Basisteil
- 13: Bürstenanordnung
- 15: Fluidantrieb
- 17: Basismodul
- 19: Endmodul
- 21: Zwischenmodul
- 22: Übergangsmodul
- 23: Teil der Beborstung
- 25: Fluidzufuhreinrichtung, Fluidzufuhrleitung, Lanze, Haltestange
- 27: Fluidausstoßorgan, Düse
- 29: Rotationsachse
- 31: Antriebsorgan
- 33: Aufnahmeabschnitt
- 35: Aussparung
- 37: Verriegelung
- 39: Erweiterung
- 41: Durchführung
- 43: Tragstange
- 45: Verbindungsstück
- 47: Stopfen
- 49: Außenmantel
- 51: Tragkäfig
- 53: Gehäuse
- 55: Schraubabschnitt
- 57: Schraubabschnitt
- 59: zylindrischer Abschnitt
- 61: Zuleitungsabschnitt
- 63: Strahlrohrabschnitt
- 65: Flanschabschnitt
- 67: Traganordnung
- 69: Halteabschnitt

## Patentansprüche

1. Vorrichtung zum Reinigen von Oberflächen, mit einem Reinigungskopf, der wenigstens ein Basisteil (11) und zumindest eine am Basisteil (11) angebrachte Bürstenanordnung (13), insbesondere eine zylindrische Bürstenwalze, umfasst, und einem zumindest teilweise in das Basisteil (11) integrierten Fluidantrieb (15) für die zumindest eine Bürstenanordnung (13), welcher dazu ausgebildet ist, die Strömungsenergie eines dem Basisteil (11) unter Druck zugeführten Fluids in eine Reinigungsbewegung der zumindest einen Bürstenanordnung (13) umzusetzen, **dadurch gekennzeichnet,**
**dass** zum Verändern der Arbeitsbreite der zumindest einen Bürstenanordnung (13) ein Satz von mehreren Bürstenmodulen (17, 19, 21) vorgesehen ist, die axial miteinander gekoppelt und von denen mehrere Bürstenmodule zu der zumindest einen Bürstenanordnung (13) zusammengesetzt sind, wobei der Satz zumindest ein mit dem Basisteil (11) gekoppeltes Basismodul (17), wenigstens ein axial außen geschlossenes Endmodul (19) sowie zumindest ein zwischen Basismodul (17) und Endmodul (19) gekoppeltes Zwischenmodul (21) umfasst.

2. Vorrichtung nach Anspruch 1,
**dadurch gekennzeichnet,**
**dass** die Bürstenmodule (17, 19, 21) durch Verschrauben miteinander gekoppelt sind.

3. Vorrichtung nach Anspruch 1 oder 2,
**dadurch gekennzeichnet,**
**dass** das Basisteil (11) insbesondere mittig zwischen zwei Bürstenanordnungen (13) angeordnet ist, wobei der von dem Basisteil (11) eingenommene Axialbereich von der Beborstung zumindest einer der Bürstenanordnungen (13) zumindest im Wesentlichen überdeckt ist, wobei insbesondere zumindest im Bereich des Basisteils (11) gelegene Teile (23) der Beborstungen der Bürstenanordnungen (13) schräg verlaufen und/oder aufeinander zu gerichtet oder geneigt sind.

4. Vorrichtung nach Anspruch 3,
**dadurch gekennzeichnet,**
**dass** am weitesten axial innen gelegene Abschnitte der Beborstungen in einander unmittelbar gegenüberliegenden Ebenen verlaufen oder einander durchdringen.

5. Vorrichtung nach einem der vorhergehenden Ansprüche,
**dadurch gekennzeichnet,**
**dass** der Fluidantrieb (15) auf einen dem Basisteil (11) zugeordneten getriebenen Teil und einen einer Fluidzufuhreinrichtung (25) zugeordneten treibenden Teil aufgeteilt ist, wobei die beiden Teile des Fluidantriebs (15) lösbar miteinander gekoppelt sind.

6. Vorrichtung nach einem der vorhergehenden Ansprüche,
**dadurch gekennzeichnet,**
**dass** der Fluidantrieb (15) ein langgestrecktes, insbesondere stiftförmiges, Fluidausstoßorgan (27) aufweist, das im Bereich des Basisteils (11) angeordnet ist, wobei insbesondere das Fluidausstoßorgan eine Düse (27) umfasst, wobei insbesondere das Fluidausstoßorgan (27) zumindest im Bereich des Basisteils (11) radial oder tangential bezüglich einer Rotationsachse (29) der zumindest einen Bürstenanordnung (13) verläuft.

7. Vorrichtung nach Anspruch 6,
**dadurch gekennzeichnet,**
**dass** das Fluidausstoßorgan (27) am Ende einer Fluidzufuhrleitung (25), insbesondere einer Lanze und/oder Haltestange, angeordnet ist, die durch Zusammenstecken mit dem Basisteil (11) gekoppelt ist, und/oder dass das Fluidausstoßorgan (27) insbesondere zur Veränderung der Reinigungsleistung und/oder des Fluidverbrauchs auswechselbar ist, wobei insbesondere ein Satz von Fluidausstoßorganen (27) mit unterschiedlichen Strömungsquerschnitten vorgesehen ist.

8. Vorrichtung nach einem der vorhergehenden Ansprüche,
**dadurch gekennzeichnet,**
**dass** der Fluidantrieb (15) ein unmittelbar vom Fluid angetriebenes Antriebsorgan (31), insbesondere eine Turbine oder ein Schaufelrad, aufweist.

9. Vorrichtung nach einem der vorhergehenden Ansprüche,
**dadurch gekennzeichnet,**
**dass** der Fluidantrieb (15) durch Verdrehen einer Fluidzufuhrleitung (25) und/oder eines Fluidausstoßorgans (27), insbesondere um 180° um eine Längsachse der Fluidzufuhrleitung (25) und/oder des Fluidausstoßorgans (27), in unterschiedlichen Drehrichtungen betreibbar ist.

10. Vorrichtung nach einem der vorhergehenden Ansprüche,
**dadurch gekennzeichnet,**
**dass** eine am Ende ein Fluidausstoßorgan (27) tragende Fluidzufuhrleitung (25) und/oder ein in Strömungsrichtung vor einem Fluidaustritt gelegener Bereich einer Fluidzufuhrleitung (25) und/oder eines Fluidausstoßorgans (27) zumindest im Wesentlichen radial bezüglich einer Rotationsachse (29) der zumindest einen Bürstenanordnung (13) verläuft und ein Fluidaustritt derart ausgerichtet ist, dass in Abhängigkeit von der Drehstellung der Fluidzufuhrleitung (25) und/oder des Fluidausstoßorgans (27) der Fluidantrieb (15), insbesondere eine Turbine oder ein Schaufelrad, in unterschiedlichem Drehsinn beaufschlagt wird.

11. Vorrichtung nach einem der vorhergehenden Ansprüche,
**dadurch gekennzeichnet,**
**dass** ein Antriebsorgan (31), insbesondere eine Turbine oder ein Schaufelrad, des Fluidantriebs (15) drehrichtungsneutral geformte Schaufelelemente aufweist.

12. Vorrichtung nach einem der vorhergehenden Ansprüche,
**dadurch gekennzeichnet,**
**dass** die zumindest eine Bürstenanordnung (13) mit einer Spritzschutzeinrichtung versehen ist, und/oder dass die Spritzschutzeinrichtung eine außerhalb der Beborstung der zumindest einen Bürstenanordnung (13) gelegene Abdeckung umfasst.

13. Vorrichtung nach Anspruch 12,
**dadurch gekennzeichnet,**
**dass** die Spritzschutzeinrichtung einen zumindest teilweise in die Beborstung hinein ragenden Abstreifer umfasst, relativ zu welchem sich die zumindest eine Bürstenanordnung (13) während des Reinigungsbetriebs bewegt und an den die Beborstung während des Reinigungsbetriebs anschlägt.

14. Vorrichtung nach einem der vorhergehenden Ansprüche,
**dadurch gekennzeichnet,**
**dass** das Basisteil (11) einen flächigen, insbesondere platten- oder scheibenförmigen, Festigkeitsträger, insbesondere aus Metall, umfasst, der zumindest bereichsweise von einem Außenteil aus Kunststoff umgeben, insbesondere in Kunststoff eingegossen oder mit Kunststoff umspritzt, ist.

## Claims

1. An apparatus for cleaning surfaces, comprising a cleaning head which includes at least one base part (11) and at least one brush arrangement (13), in particular a cylindrical brush roller, attached to the base part (11); and
a fluid drive (15) for the at least one brush arrangement (13) which is at least partly integrated into the base part (11) and which is designed to convert the flow energy of a fluid supplied to the base part (11) at pressure into a cleaning movement of the brush arrangement (13),
**characterized in that**
a set of a plurality of brush modules (17, 19, 21) is provided for changing the working width of the at least one brush arrangement (13), said brush modules being axially coupled to one another and of which a plurality of brush modules are assembled to form the at least one brush arrangement (13), with the set including at least one base module (17) coupled to the base part (11), at least one axially outwardly closed end module (19) as well as at least one intermediate module (21) coupled between the base module (17) and the end module (19).

2. An apparatus in accordance with claim 1,
**characterized in that**
the brush modules (17, 19, 21) are coupled to one another by screwing.

3. An apparatus in accordance with claim 1 or claim 2,
**characterized in that**
the base part (11) is arranged between two brush arrangements (13), in particular centrally, with the axial region taken up by the base part (11) being at least substantially covered by the bristles of at least one of the brush arrangements (13), and with parts (23) of the bristles of the brush arrangements (13) disposed at least in the region of the base part (11) in particular extending at a slope and/or being directed or inclined toward one another.

4. An apparatus in accordance with claim 3,
**characterized in that**
sections of the bristles disposed furthest axially inwardly extend into mutually directly opposite planes or pass through one another.

5. An apparatus in accordance with any one of the preceding claims,
**characterized in that**
the fluid drive (15) is divided between a driven part associated with the base part (11) and a driving part associated with a fluid supply device (25), with the two parts of the fluid drive (15) being releasably coupled to one another.

6. An apparatus in accordance with any one of the preceding claims,
**characterized in that**
the fluid drive (15) has an elongated fluid expulsion member (27), in particular of pin-shape, which is arranged in the region of the base part (11), with the fluid expulsion member in particular including a nozzle (27), with the fluid expulsion member (27) in particular extending radially or tangentially with respect to an axis of rotation (29) of the at least one brush arrangement (13) at least in the region of the base part (11).

7. An apparatus in accordance with claim 6,
**characterized in that**
the fluid expulsion member (27) is arranged at the end of a fluid supply line (25), in particular of a lance and/or of a holding rod, which is coupled to the base part (11) by plugging together; and/or in that the fluid expulsion member (27) is replaceable, in particular to change the cleaning performance and/or the fluid consumption, with in particular a set of fluid expulsion members (27) having different flow cross-sections being provided.

8. An apparatus in accordance with any one of the preceding claims,
**characterized in that**
the fluid drive (15) has a drive member (31), in particular a turbine or a bucket wheel, directly driven by the fluid.

9. An apparatus in accordance with any one of the preceding claims,
**characterized in that**
the fluid drive (15) can be operated in different directions of rotation by rotation of a fluid supply line (25) and/or of a fluid expulsion member (27), in particular by 180° about a longitudinal axis of the fluid supply line (25) and/or of the fluid expulsion member (27).

10. An apparatus in accordance with any one of the preceding claims,
**characterized in that**
a fluid supply line (25) carrying a fluid expulsion member (27) at the end and/or a region of a fluid supply line (25) and/or of a fluid expulsion member (27) disposed in front of a fluid outlet in the flow direction extends/extend at least substantially radially with respect to an axis of rotation (29) of the at least one brush arrangement (13) and a fluid outlet is aligned such that the fluid drive (15), in particular a turbine or a bucket wheel, is acted on in different senses of rotation in dependence on the rotational position of the fluid supply line (25) and/or of the fluid expulsion member (27).

11. An apparatus in accordance with any one of the preceding claims,
**characterized in that**
a drive member (31), in particular a turbine or a bucket wheel, of the fluid drive (15), has bucket elements shaped neutrally with respect to the direction of rotation.

12. An apparatus in accordance with any one of the preceding claims,
**characterized in that**
the at least one brush arrangement (13) is provided with a splash protection device; and/or **in that** the splash protection device includes a cover disposed outside the bristles of the at least one brush arrangement (13).

13. An apparatus in accordance with claim 12,
**characterized in that**
the splash protection device includes a scraper which projects at least partly into the bristles and relative to which the at least one brush arrangement (13) moves during the cleaning operation and which the bristles abut during the cleaning operation.

14. An apparatus in accordance with any one of the preceding claims,
**characterized in that**
the base part (11) includes an areal, in particular plate-shaped or disk-shaped reinforcement, in particular of metal, which is surrounded at least regionally by an outer part of plastic, in particular cast in plastic or overmolded by plastic.

## Revendications

1. Dispositif de nettoyage de surfaces, comportant une tête de nettoyage qui comprend au moins une partie de base (11) et au moins un moyen formant brosse (13), en particulier une brosse à rouleau cylindrique, agencé(e) sur la partie de base, et
un entraînement fluidique (15) intégré au moins partiellement dans la partie de base (11) et destiné audit au moins un moyen formant brosse (13), qui est réalisé pour convertir l'énergie d'écoulement d'un fluide amené sous pression à la partie de base (11) en un mouvement de nettoyage dudit au moins un moyen formant brosse (13),
**caractérisé en ce que**
pour modifier la largeur de travail dudit au moins un moyen formant brosse (13), il est prévu un lot de plusieurs modules formant brosse (17, 19, 21) qui sont couplés axialement entre eux et dont plusieurs modules formant brosse sont regroupés en ledit au moins un moyen formant brosse (13), le lot comprenant au moins un module de base (17) couplé à la partie de base (11), au moins un module d'extrémité (19) fermé axialement à l'extérieur ainsi qu'au moins un module intermédiaire (21) couplé entre le module de base (17) et le module d'extrémité (19).

2. Dispositif selon la revendication 1,
**caractérisé en ce que**
les modules formant brosse (17, 19, 21) sont couplés entre eux par vissage.

3. Dispositif selon la revendication 1 ou 2,
**caractérisé en ce que**
la partie de base (11) est agencée en particulier au milieu entre deux moyens formant brosse (13), la zone axiale occupée par la partie de base (11) étant recouverte au moins sensiblement par le garnissage de poils de l'un au moins des moyens formant brosse (13), et en particulier au moins les parties (23) du garnissage de poils des moyens formant brosse (13) qui sont situées dans la zone de la partie de base (11) s'étendent en oblique et/ou sont dirigés les uns vers les autres ou sont inclinés entre eux.

4. Dispositif selon la revendication 3,
**caractérisé en ce que**
les portions des garnissages de poils qui sont situées axialement le plus à l'intérieur s'étendent dans des plans directement opposés l'un à l'autre ou se traversent mutuellement.

5. Dispositif selon l'une des revendications précédentes,
**caractérisé en ce que**
l'entraînement fluidique (15) est subdivisé en une partie menée associée à la partie de base et en une partie menant associée à un moyen d'alimentation en fluide (25), les deux parties de l'entraînement fluidique (15) étant couplées l'une à l'autre de façon amovible.

6. Dispositif selon l'une des revendications précédentes,
**caractérisé en ce que**
l'entraînement fluidique (15) est un organe d'éjection de fluide (27) allongé, en particulier en forme de tige, qui est agencé dans la zone de la partie de base (11), et en particulier l'organe d'éjection de fluide comprend une buse (27), et en particulier au moins dans la zone de la partie de base (11) l'organe d'éjection de fluide (27) s'étend radialement ou tangentiellement par rapport à un axe de rotation (29) dudit au moins un moyen formant brosse (13).

7. Dispositif selon la revendication 6,
**caractérisé en ce que**
l'organe d'éjection de fluide (27) est agencé à l'extrémité d'une conduite d'alimentation en fluide (25), en particulier d'une lance et/ou d'une barre de retenue, qui est couplée à la partie de base (11) par enfichage, et/ou **en ce que** l'organe d'éjection de fluide (27) est interchangeable en particulier pour varier la puissance de nettoyage et/ou la consommation de fluide, et il est prévu en particulier un lot d'organes d'éjection de fluide (27) ayant différentes sections d'écoulement.

8. Dispositif selon l'une des revendications précédentes,
**caractérisé en ce que**
l'entraînement fluidique (15) comprend un organe de travail (31) entraîné directement par le fluide, en particulier une turbine ou une roue à aubes.

9. Dispositif selon l'une des revendications précédentes,
**caractérisé en ce que**
l'entraînement fluidique (15) est apte à être entraîné dans différentes directions de rotation par rotation d'une conduite d'alimentation en fluide (25) et/ou d'un organe d'éjection de fluide (27), en particulier de 180° autour d'un axe longitudinal de la conduite d'alimentation en fluide (25) et/ou de l'organe d'éjection de fluide (27).

10. Dispositif selon l'une des revendications précédentes,
**caractérisé en ce que**
une conduite d'alimentation en fluide (25) portant à l'extrémité un organe d'éjection de fluide (27) et/ou une zone d'une conduite d'alimentation en fluide (25) et/ou d'un organe d'éjection de fluide (27), située en amont d'une sortie de fluide, en direction d'écoulement, s'étend au moins sensiblement radialement par rapport à un axe de rotation (29) dudit au moins un moyen formant brosse (13), et une sortie de fluide est orientée de telle sorte qu'en fonction de la position de rotation de la conduite d'alimentation en fluide (25) et/ou de l'organe d'éjection de fluide (27), l'entraînement fluidique (15), en particulier une turbine ou une roue à aubes, est sollicité(e) dans un sens de rotation différent.

11. Dispositif selon l'une des revendications précédentes,
**caractérisé en ce que**
un organe d'entraînement (31), en particulier une turbine ou une roue à aubes, de l'entraînement fluidique (15) comprend des éléments d'aube de forme neutre vis-à-vis de la direction de rotation.

12. Dispositif selon l'une des revendications précédentes,
**caractérisé en ce que**
ledit au moins un moyen formant brosse (13) est pourvu d'un organe de protection anti-projections, et/ou **en ce que** l'organe de protection anti-projections comprend un recouvrement situé à l'extérieur du garnissage de poils dudit au moins un moyen formant brosse (13).

13. Dispositif selon la revendication 12,
**caractérisé en ce que**
l'organe de protection anti-projections comprend au moins un racleur pénétrant au moins partiellement dans le garnissage de poils, par rapport auquel ledit au moins un moyen formant brosse (13) se déplace pendant l'opération de nettoyage et contre lequel le garnissage de poils vient buter pendant l'opération de nettoyage.

14. Dispositif selon l'une des revendications précédentes,
**caractérisé en ce que**
la partie de base (11) comprend un support de renforcement surfacique, en particulier en forme de plaque ou de disque, en particulier en métal, qui est au moins partiellement entouré par une pièce extérieure en matière plastique, en particulier noyé dans de la matière plastique ou surmoulé de matière plastique.
